# EUROPÄISCHE PATENTANMELDUNG

(11) **EP 0 643 237 A1**
(43) Veröffentlichungstag der Anmeldung: **15.03.1995**
(21) Anmeldenummer: 94105350.6
(22) Anmeldetag: 07.04.1994
(51) Int. Cl.: F16F 13/10, B23P 15/00

(54) **Verfahren zur Herstellung eines Maschinenlagers**

(30) Priorität: 15.09.1993 DE 4331331
(71) Anmelder: Firma Carl Freudenberg, D-69469 Weinheim (DE)
(72) Erfinder: Hamaekers, Arno, D-69517 Gorxheimertal-Unterflockenbach (DE)

(57) **Zusammenfassung**

Verfahren zur Herstellung eines Maschinenlagers (1) mit einem Federkörper (2) aus Gummi, bei dem der Federkörper (2) an einem Ringelement (3) aus einem elastisch verformbaren Werkstoff festgelegt wird. Das Ringelement (3) wird aus einem streifenförmigen Abschnitt eines Bleches (13) erzeugt und nach seiner Überführung in die Gestalt eines Ringes (14) in die Form des Ringelements (3) überführt.

## Beschreibung

Die Erfindung betrifft ein Verfahren zur Herstellung eines Maschinenlagers mit einem Federkörper aus Gummi, bei dem der Federkörper an einem Ringelement aus einem elastisch verformbaren Werkstoff festgelegt wird.

Das Ringelement kann beispielsweise einen Bestandteil eines hydraulisch dämpfenden Maschinenlagers bilden und mit einem Auflager aus metallischem Werkstoff verbunden sein. Das Ringelement umfaßt einen Befestigungsflansch, der an dem Auflager befestigbar ist und einen Aufnahmeflansch zur Aufnahme des kreisringförmigen Federkörpers, wobei der Federkörper zumeist die Gestalt eines Hohlkegels aufweist. Das Maschinenlager wird auf der dem Auflager abgewandten Seite von einem Traglager begrenzt, das mit dem Federkörper verbunden ist. Die Herstellung des Ringelements eines derartigen Maschinenlagers erfolgte bisher, indem aus einem ebenen Blechteil eine kreisringförmige Scheibe ausgestanzt wurde, die anschließend durch ein Umformverfahren, beispielsweise durch Tiefziehen, in die für die Montage erforderliche Form gebracht wurde. Dieses Verfahren bedingt einen sehr hohen Materialbedarf, da die aus dem ebenen Blech ausgestanzten Kreisringe einen hohen Verschnitt zur Folge haben. Desweiteren ist von Nachteil, daß das montagefertige Ringelement durch die Umformung entlang seiner axialen Erstreckung Teilbereiche voneinander abweichender Materialstärke aufweist, wobei fertigungsbedingt die geringsten Materialstärken im Bereich der seitlichen Begrenzungen des Ringelements, an denen der Federkörper und das Auflager festgelegt sind, auftreten. Diese Materialschwächung ergibt sich dadurch, daß das Material bei seiner Umformung gestreckt und dadurch in seiner Dicke verringert wird. Die Gebrauchseigenschaften eines derartigen Maschinenlagers sind wenig befriedigend, da elastische Verformungen des Ringelements, insbesondere im Bereich der Festlegung des Federkörpers, zu einer Änderung des Betriebsverhaltens des Lagers führen. Die Materialschwächung des Ringelements läßt sich durch die Verwendung eines tiefziehfähigen Blechs hoher Güte verringern, wobei allerdings zu beachten ist, daß derartige Materialien in wirtschaftlicher Hinsicht wenig befriedigend sind.

Der Erfindung liegt die Aufgabe zugrunde, ein Herstellungsverfahren der eingangs beschriebenen Art derart weiterzuentwickeln, daß die Herstellung des Ringelements und damit die Herstellung des gesamten Maschinenlagers vereinfacht ist, daß der Materialbedarf zur Herstellung des Ringelements wesentlich reduziert ist, daß ein Tiefziehblech hoher Güte nicht erforderlich ist und daß das Ringelement entlang seiner gesamten Erstreckung eine im wesentlichen übereinstimmende Materialstärke aufweist.

Diese Aufgabe wird erfindungsgemäß durch die kennzeichnenden Merkmale von Anspruch 1 gelöst. Auf vorteilhafte Weiterbildungen des Verfahrens nehmen die Unteransprüche bezug.

Bei dem erfindungsgemäßen Herstellungsverfahren ist es vorgesehen, daß das Ringelement aus einem streifenförmigen Abschnitt eines Blechs erzeugt und nach seiner Überführung in die Gestalt eines Ringes in die Form des Ringelementes überführt wird. Hierbei ist von Vorteil, daß der Materialbedarf zur Herstellung des Ringelements durch die Vermeidung von Verschnitt auf ein Minimum beschränkt ist. Der streifenförmige Abschnitt des Blechs weist bevorzugt genau die Breite auf, die der axialen Ausdehnung des im ersten Verfahrensschritt herzustellenden Ringes entspricht. Der streifenförmige, ebene Abschnitt des Blechs wird in einer Rundbiegemaschine zu einem Ring umgeformt, der im wesentlichen hohlzylinderförmig ausgebildet ist. Bereits durch diese spanlose Umformung weist der Ring im Vergleich zu ausgestanzten Ringen eine größere Zähigkeit auf. Nachdem der streifenförmige Abschnitt in die Gestalt eines Ringes überführt ist, wird dieser durch Umformen in die Gestalt des Ringelements überführt. Die Form des Ringelements ist an die jeweiligen Gegebenheiten des Anwendungsfalles anzupassen. Ein im wesentlichen V-förmiger Querschnitt des Ringelements ist für die meisten Anwendungsfälle besonders geeignet, wobei einer der Schenkel mit einem Befestigungsflansch des Auflagers und der benachbarte Schenkel zur Aufnahme des Federkörpers vorgesehen ist. In Abhängigkeit vom Öffnungswinkel der V-Form kann die axiale Nachgiebigkeit des Maschinenlagers in Verbindung mit der Nachgiebigkeit des zur Anwendung gelangenden Federkörpers eingestellt werden. Je größer der Öffnungswinkel ist, den die beiden Schenkel begrenzen, desto nachgiebiger ist das Maschinenlager in axialer Richtung, wenn in beiden Fällen identische Federkörper zugrunde gelegt werden. Bei dem erfindungsgemäßen Verfahren ist von Vorteil, daß das Ringelement insgesamt eine übereinstimmende Materialstärke aufweist und daher Verformungen im Bereich der Festlegung am Auflager und/oder im Bereich der Festlegung des Federkörpers ausgeschlossen sind.

Die Enden, durch die der streifenförmige Abschnitt begrenzt ist, können nach der Überführung des Abschnitts in die Gestalt des Ringes miteinander verschweißt werden. Sowohl eine radiale als auch eine axiale Verschiebung der beiden Enden relativ zueinander kann dadurch zuverlässig verhindert werden. Außerdem ist durch die relativ unbewegliche Zuordnung der beiden Enden zueinander die Weiterverarbeitung des Ringes zum Ringelement vereinfacht. Darüber hinaus ist von Vorteil, daß eventuell auftretender Verzug bei der Verschweißung der beiden Enden durch die anschließende Umformung des Ringes zum Ringelement ausgeglichen werden kann. Eine Verschweißung der beiden Enden im Anschluß an die Herstellung des Ringelements wäre demgegenüber nachteilig.

Die Überführung des Ringes in die Gestalt des Ringelements kann durch Rollen, Pressen und/oder Aufweiten bewirkt werden. Insbesondere das Rollen stellt ein in fertigungstechnischer Hinsicht einfaches Verfahren dar, bei dem der Ring auf einer drehbaren Nabe befestigt wird, die ein entsprechend den Rollen ausgebildetes Negativprofil aufweist. Zur Herstellung des Ringelementes rotieren die Nabe und der Ring um ihre gemeinsame Achse, wobei zumindest eine Rolle in radialer Richtung solange in Richtung des Negativprofils der Nabe zugestellt wird, bis der Werkstoff des Ringes die Oberfläche des Negativprofils und die Rolle anliegend berührt. Im Anschluß an die Umformung weist der Ring die Gestalt des gewünschten Ringelements auf. Bedarfsweise besteht die Möglichkeit, das Ringelement zu kalibrieren. Dazu kann es vorgesehen sein, daß dieses in radialer Richtung aufgeweitet oder gestaucht wird. Wird der Ring durch Pressen in die Gestalt des Ringelements überführt, ist dabei von Vorteil, daß weder der Ring noch das Werkzeug zur Herstellung des Ringelements in eine Drehbewegung versetzt werden müssen.

In den nachfolgend beschriebenen Figuren ist das durch das Verfahren hergestellte Ringelement in Verbindung mit dem Maschinenlager näher beschrieben.

In Fig. 1 ist ein Ausführungsbeispiel eines Maschinenlagers gezeigt, das als Hydrolager ausgebildet ist und ein Ringelement umfaßt, das nach dem erfindungsgemäßen Verfahren hergestellt wurde.

In Fig. 2 ist ein Ausschnitt aus einem streifenförmigen Abschnitt eines Blechs in einer Draufsicht und in quergeschnittener Darstellung gezeigt.

In Fig. 3 ist der streifenförmige Abschnitt aus Fig. 2 im Anschluß an seine Umformung zu einem Ring in längsgeschnittener Darstellung gezeigt. Die beiden Enden des streifenförmigen Abschnitts sind verschweißt, wie die quergeschnittene Darstellung zeigt.

In Fig. 4 ist der Ring aus Fig. 3 gezeigt, der durch das erfindungsgemäße Verfahren in das Ringelement überführt wurde, das in dem Lager aus Fig. 1 zur Anwendung gelangt.

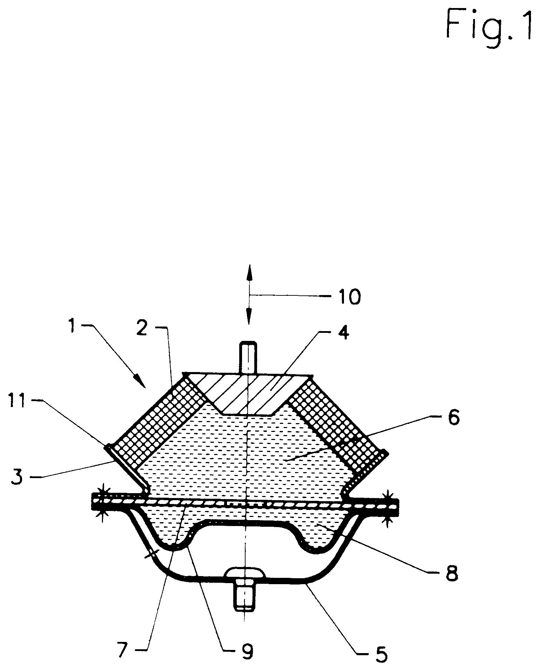

Bei dem in Fig. 1 gezeigten Maschinenlager 1 handelt es sich um ein schematisch dargestelltes Hydrolager üblicher Bauart, umfassend ein Traglager 4 und ein Auflager 5, die durch einen Federkörper 2 aus gummielastischem Werkstoff elastisch nachgiebig aufeinander abgestützt sind. Die Arbeitskammer 6 des Hydrolagers ist durch das Traglager 4, den hohlkegeligen Federkörper 2, das Ringelement 3 und die Trennwand 7 begrenzt, wobei die Arbeitskammer flüsssigkeitsleitend mit einer axial benachbarten Ausgleichskammer 8 verbunden ist. Die Ausgleichskammer 8 ist in axialer Richtung einerseits durch die Trennwand 7 und in axialer Richtung andererseits durch eine rollbalgartig ausgebildete Membran 9 begrenzt, die derart dimensioniert und ausgestaltet ist, daß Flüssigkeitsbestandteile, die aus der Arbeitskammer 6 in die Ausgleichskammer 8 verlagert werden, nahezu drucklos aufgenommen werden können. Bei Einleitung von Schwingungen 10 in das Lager 1 ergibt sich abwechselnd eine Vergrößerung und Verkleinerung der Arbeitskammer 6. Das auf dem Federkörper 2 abgestützte Traglager 4 ist schwingungsbedingt in axialer Richtung relativ beweglich zum Ringelement 3 angeordnet. Durch die übereinstimmende Wandstärke des Ringelements 3 wird verhindert, daß eine Einfederung des Traglagers 4 eine bogenförmige, im wesentlichen radiale Verformung der randseitigen Begrenzung 10 des Ringelements 3 zur Folge hat, an dem der Federkörper 2 festgelegt ist. Auf der dem Auflager 5 zugewandten Seite ist das Ringelement 3 unter Zwischenfügung der Trennwand 7 und der Membran 9 flüssigkeitsdicht mit dem Auflager 5 verbunden.

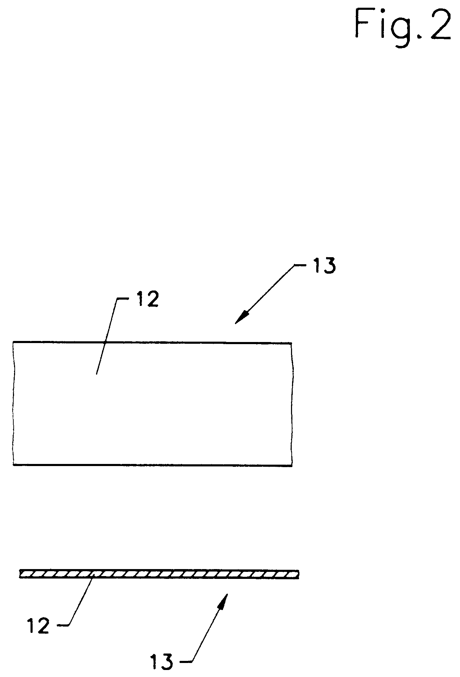

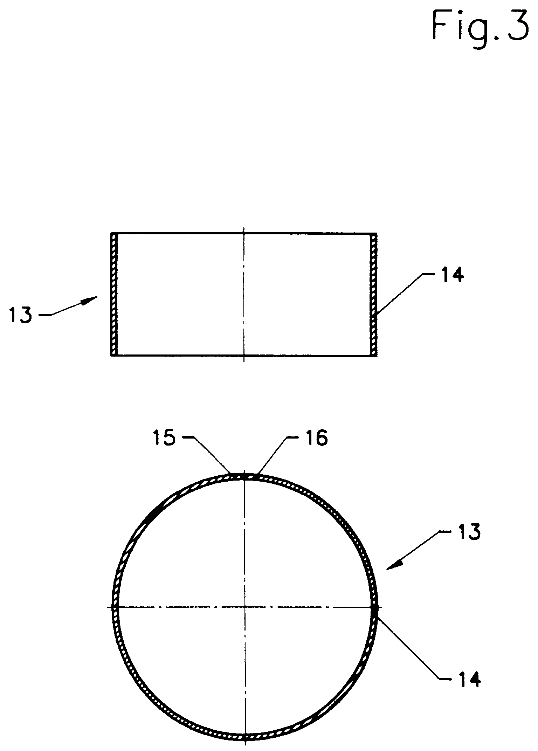

In Fig. 2 ist ein Ausschnitt aus einem streifenförmiger Abschnitt 12 eines Blechs 13 in einer Draufsicht und in längsgeschnittener Darstellung gezeigt, der durch eine Rundbiegemaschine in die Form eines kreisförmigen Rings 14 überführt wird. In Fig. 3 ist der Ring 14 längs- und quergeschnitten gezeigt. Im Anschluß an die Umformung zu einem Ring werden die beiden Enden 15, 16 des Abschnitts relativ unbeweglich zueinander festgelegt. Dies kann beispielsweise dadurch geschehen, daß die beiden Enden 15, 16 miteinander verschweißt werden oder kongruent geformte Ausnehmungen aufweisen, die formschlüssig miteinander in Eingriff bringbar sind.

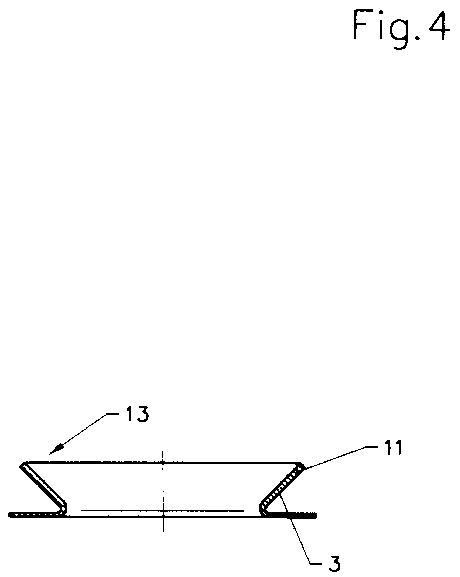

Anschließend wird der Ring in einem nächsten Verfahrensschritt derart umgeformt, daß er die montagefertige Form, wie in Fig. 1 gezeigt, aufweist. Das Ringelement 3 als Einzelteil ist in Fig. 4 dargestellt. Dabei ist von hervorzuhebendem Vorteil, daß bei der Herstellung des Ringelements 3 der Materialbedarf auf ein Minimum beschränkt ist, da bei seiner Herstellung kein Verschnitt anfällt. Außerdem hat das Ringelement 3 im gesamten Bereich seiner gesamten Erstreckung eine, dem streifenförmigen Abschnitt 12 weitgehend entsprechende Dicke.

Lager, in denen ein nach dem erfindungsgemäßen Verfahren hergestelltes Ringelement 3 zur Anwendung gelangt, weisen gute Gebrauchseigenschaften während einer langen Gebrauchsdauer auf.

## Patentansprüche

1. Verfahren zur Herstellung eines Maschinenlagers mit einem Federkörper aus Gummi, bei dem der Federkörper an einem Ringelement aus einem elastisch verformbaren Werkstoff festgelegt wird, dadurch gekennzeichnet, daß das Ringelement (3) aus einem streifenförmigen Abschnitt (12) eines Bleches (13) erzeugt und nach seiner Überführung in die Gestalt eines Ringes in die Form des Ringelementes (3) überführt wird.

2. Verfahren nach Anspruch 1, dadurch gekennzeichnet, daß der Abschnitt (12) in Umfangsrichtung durch Enden (15, 16)begrenzt ist, die nach seiner Überführung in die Gestalt des Ringes (14) miteinander verschweißt werden.

3. Verfahren nach Anspruch 1 bis 2, dadurch gekennzeichnet, daß die Überführung des Ringes (14) in die Gestalt des Ringelementes (3) durch Rollen, Pressen und/oder Aufweiten bewirkt wird.
